(19)

Europäisches Patentamt
European Patent Office
Office européen des brevets

(11) EP 2 777 135 B1

# (12) FASCICULE DE BREVET EUROPEEN

(45) Date de publication et mention
de la délivrance du brevet:
**29.04.2020 Bulletin 2020/18**

(21) Numéro de dépôt: **12794401.5**

(22) Date de dépôt: **30.10.2012**

(51) Int Cl.:
*H02K 1/27* *(2006.01)*   *H02K 21/04* *(2006.01)*

(86) Numéro de dépôt international:
**PCT/FR2012/052499**

(87) Numéro de publication internationale:
**WO 2013/068675 (16.05.2013 Gazette 2013/20)**

## (54) ROTOR DE MACHINE ELECTRIQUE TOURNANTE ET MACHINE ELECTRIQUE TOURNANTE COMPRENANT UN TEL ROTOR

ROTOR FÜR EINE ELEKTRISCHE DREHMASCHINE UND ELEKTRISCHE DREHMASCHINE MIT EINEM SOLCHEN ROTOR

ROTOR FOR A ROTARY ELECTRIC MACHINE, AND ROTARY ELECTRIC MACHINE INCLUDING SUCH A ROTOR

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **08.11.2011 FR 1160150**

(43) Date de publication de la demande:
**17.09.2014 Bulletin 2014/38**

(73) Titulaire: **Valeo Equipements Electriques Moteur 94046 Créteil Cedex (FR)**

(72) Inventeurs:
• **LEGRANGER, Jérôme**
  **F-94000 Creteil (FR)**
• **LI, Li**
  **F-78220 Viroflay (FR)**

(56) Documents cités:
**EP-A1- 1 450 462      EP-A2- 2 372 872
DE-A1-102008 043 739**

**Description**

**DOMAINE TECHNIQUE DE L'INVENTION.**

La présente invention concerne un rotor à aimants permanents destiné à une machine électrique tournante.
L'invention concerne également une machine électrique tournante comprenant un rotor de ce type, notamment pour des applications comme moteur électrique de traction dans des véhicules automobiles électriques et hybrides ou comme actionneur auxiliaire.

**ARRIERE-PLAN TECHNOLOGIQUE DE L'INVENTION.**

De par leurs performances accrues en termes de rendement et de puissance massique et volumique, les machines synchrones à aimants permanents trouvent aujourd'hui une large application dans le domaine des véhicules automobiles.
Ces machines électriques sont réalisables dans une large gamme de puissance et de vitesse et trouvent des applications aussi bien dans les véhicules de type « tout électrique » que dans les véhicules à bas $CO_2$ de types dits « mild-hybrid » et « full-hybrid » (en terminologie anglaise).
Les applications « mild-hybrid » concernent généralement des machines électriques de l'ordre de 8 à 20 kW, par exemple, un moteur électrique monté en face avant d'un moteur thermique et couplé à celui-ci par une courroie de transmission. Il est possible avec un tel moteur électrique de réduire la cylindrée de la motorisation thermique (« engine downsizing » en terminologie anglaise) en prévoyant une assistance électrique en couple qui fournit un appoint de puissance, notamment lors des reprises. De plus, une traction à faible vitesse, par exemple en environnement urbain, peut également être assurée par ce même moteur électrique.
Les applications de type « full-hybrid» concernent généralement des moteurs de 30 à 50 kW pour des architectures de type série et/ou parallèle avec un niveau d'intégration plus abouti du ou des moteurs électriques dans la chaîne de traction du véhicule.
Une structure de rotor dite "à concentration de flux" a de longue date permis d'obtenir des flux magnétiques importants avec des aimants obtenus à partir de ferrites frittées ou liées, et d'atteindre des performances remarquables, performances encore améliorées avec des aimants aux terres rares tels que les aimants de type Néodyme-Fer-Bore (NeFeB), Samarium-Fer (SmFe), ou Samarium-Cobalt (SmCo).
Dans un véhicule automobile, lorsque la machine électrique est utilisée comme moteur de traction sur différentes missions de circulation du véhicule, celle-ci doit pouvoir fonctionner à des régimes de charge et de vitesse variables et doit donc être défluxable pour atteindre la zone des hautes vitesses.
Des structures particulières de rotor à aimants permanents pour faciliter le défluxage ont donc été proposées, notamment par Bianchi Nicola, dans l'article "Salient Rotor PM Synchronous Motors for an Extended Flux-weakening Operation Range", IEEE Trans. on Industry Applications, Vol. 36, n° 4, juillet 2000.
Selon cet article, l'effet souhaité est obtenu au moyen de pièces polaires comportant une pluralité d'évidements internes et un rapport de saillance supérieur à l'unité.
Il existe donc un besoin pour une solution technique adaptée aux applications de l'automobile.
Il est connu que les machines à double excitation sont plus facilement défluxables et offrent la possibilité de combiner dans leur rotor une densité d'énergie élevée apportée par les aimants permanents et une capacité à contrôler le flux magnétique dans l'entrefer apportée par le bobinage d'excitation.
Une structure intéressante de machine à double excitation est divulguée dans l'article de Li Li et al. intitulé «Some Armature Reaction Compensation Methods, Numerical Design of Experiments and Optimization for a Hybrid Excitation Machine » et publié dans IEMDC, Miami, USA (2009).
Cependant un inconvénient inhérent aux machines à aimants permanents est les ondulations de couple dues à l'anisotropie du rotor et du stator et aux distributions non sinusoïdales du champ magnétique.
Un rotor présentant une extension des pôles en biais dans une direction axiale est une solution technique connue pour pallier cet inconvénient. Mais cette solution conduit à des difficultés de production et elle est généralement évitée.
D'autres solutions aux fins de réduire les oscillations de couple, telles que l'encochage fractionnaire ou des rotors avec des pôles de largeurs différentes conduisent à des problèmes de fabrication, ou ne sont justifiées que pour des moteurs de faible puissance.
Par EP2372872A2, il est connu une machine électrique tournante comportant un rotor cylindrique à lobes multiples et ayant un ensemble de pôles Nord et Sud alternés formés à partir d'aimants permanents rectangulaires disposés selon une configuration de concentration de flux radial. Les aimants sont logés dans des évidements respectifs formés dans une masse magnétique du rotor. Le rotor comporte un circuit magnétique de défluxage dont la réluctance magnétique est déterminée à partir d'une réluctance magnétique interne de chaque aimant de telle manière que le rapport entre les réluctances magnétiques varie de 0,3 à 3.

Dans DE102008043739A1, il est divulgué une machine électrique tournante comprenant un rotor et un stator et ayant, dans la surface circonférentielle du rotor et/ou du stator, au moins deux évidements. Les évidements sont répartis irrégulièrement dans la surface circonférentielle et provoquent une modification du flux magnétique dans le rotor et/ou stator.

Dans EP1450462A1, il est décrit un rotor pour machine électrique tournante, le rotor étant formé d'un corps de rotor avec une surface circonférentielle sensiblement cylindrique et d'aimants permanents intégrés dans le corps de rotor. La surface cylindrique fait face à un entrefer situé entre le rotor et un stator de la machine électrique tournante. Des rainures sont formées dans la surface circonférentielle du rotor, en regard de l'entrefer. Les positions des rainures sont définies par un décalage angulaire par rapport à un aimant adjacent. La valeur de l'angle de décalage varie d'un aimant permanent à l'autre.

## DESCRIPTION GENERALE DE L'INVENTION.

Le but de la présente invention est donc de minimiser les ondulations de couple d'une machine comprenant un rotor à aimants permanents seuls, ou alternativement d'une machine à double excitation.

Elle a précisément pour objet un rotor de machine électrique tournante comprenant une pluralité de pôles Nord et pôles Sud alternés et formés à partir d'une pluralité d'aimants permanents agencés dans des premiers évidements.

Ces premiers évidements sont répartis régulièrement autour d'un axe du rotor et se prolongent axialement dans une masse magnétique de ce rotor de manière à définir un nombre prédéterminé Np de sections polaires circonférentielles.

Ces sections polaires comportent des deuxièmes évidements agencés entre les aimants permanents et qui se prolongent axialement dans la masse magnétique du rotor de manière à définir une pluralité de ponts magnétiques présentant une pluralité de hauteurs dans une partie circonférentielle de ce rotor.

Le rotor selon l'invention est remarquable en ce qu'une première hauteur et une deuxième hauteur de deux de ces ponts magnétiques consécutifs sont différentes, lesdites première et deuxième hauteurs étant déterminées suivant une direction radiale du rotor.

Fort avantageusement, le rotor de machine électrique tournante selon l'invention est remarquable en ce qu'il comprend en outre une pluralité de bobines d'excitation logées dans une pluralité de troisièmes évidements.

Ces troisièmes évidements se prolongent axialement entre les sections polaires et sont agencés radialement dans une partie intermédiaire du rotor entre une partie centrale et la partie circonférentielle.

Chacune de ces bobines d'excitation est insérée autour d'un noyau formant cloison entre deux de ces troisièmes évidements consécutifs, ce noyau étant sensiblement aligné sur un axe radial central de la section polaire correspondante.

Dans cette variante, certains des deuxièmes évidements sont des passages de tirants.

Dans le rotor selon l'invention, trois au moins des hauteurs des ponts magnétiques sont avantageusement différentes.

En général, selon l'invention, une succession des hauteurs des ponts magnétiques dans une direction circonférentielle est de préférence la répétition d'une même séquence prédéterminée de ces hauteurs.

Notamment, une longueur Ls de cette séquence est avantageusement un diviseur du nombre prédéterminé Np de sections polaires, différent de 1 et de Np.

Conformément au but de l'invention, ce rotor est remarquable en ce qu'un rapport R entre la première hauteur et la deuxième hauteur de deux ponts magnétiques consécutifs est prédéterminé de manière à minimiser des oscillations de couple de la machine.

On tire bénéfice du fait qu'un tel rapport R entre la première hauteur et la deuxième hauteur est prédéterminé de manière à minimiser des oscillations de couple de la machine à couple sensiblement constant.

L'invention concerne également une machine électrique tournante qui comprend un rotor présentant les caractéristiques ci-dessus.

Ces quelques spécifications essentielles auront rendu évidents pour l'homme de métier les avantages apportés par le rotor de machine électrique tournante selon l'invention, ainsi que par la machine électrique correspondante, par rapport à l'état de la technique antérieur.

Les spécifications détaillées de l'invention sont données dans la description qui suit en liaison avec les dessins ci-annexés. Il est à noter que ces dessins n'ont d'autre but que d'illustrer le texte de la description et ne constituent en aucune sorte une limitation de la portée de l'invention.

## BREVE DESCRIPTION DES DESSINS.

La **Figure 1** montre une vue en coupe radiale partielle d'une machine électrique tournante comprenant un rotor à aimants permanents selon l'invention.

La **Figure 2** montre une vue en coupe radiale partielle d'une variante d'une machine électrique tournante comprenant un rotor à aimants permanents selon l'invention, et comportant des bobines d'excitation.

La **Figure 3** montre les oscillations de couple d'une machine électrique tournante fonctionnant en moteur ne comprenant pas (trait continu) et comprenant un rotor selon l'invention (trait en pointillé).

La **Figure 4** montre un exemple de la variation de l'amplitude relative des oscillations de couple d'une machine comprenant un rotor selon l'invention en fonction du rapport des hauteurs de deux ponts magnétiques consécutifs.

## DESCRIPTION DES MODES DE REALISATION PREFERES DE L'INVENTION.

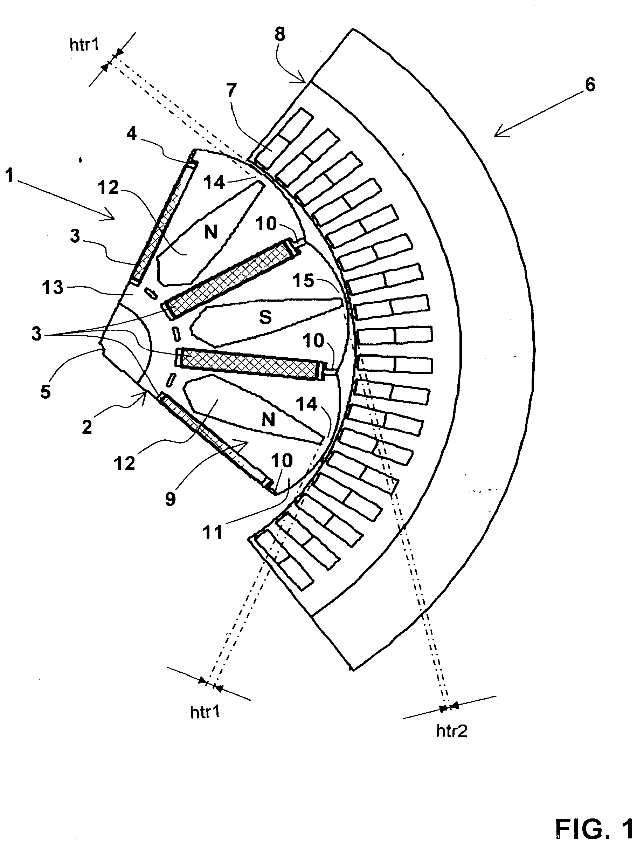

La coupe radiale partielle d'une machine électrique tournante comprenant un rotor 1 à aimants permanents dans un mode de réalisation préféré de l'invention, représentée sur la **Figure 1,** montre bien l'agencement dans la masse magnétique 2 du rotor 1 des aimants permanents 3 dans des premiers évidements 4 répartis régulièrement autour d'un axe 5 de manière à former une pluralité de pôles Nord N et pôles Sud S alternés.

Une réalisation concrète de cette machine est par exemple un moteur/génératrice de 8 à 20 KW pour des applications dans des véhicules automobiles du type dits «mild-hybrid».

Dans son mode de fonctionnement en moteur cette machine peut être conçue pour le démarrage du moteur thermique, l'assistance en couple du moteur thermique ainsi que pour la traction électrique à faible vitesse du véhicule.

La **Figure 1** correspond à une forme de réalisation particulière de cette machine, où le rotor 1 comporte douze aimants permanents 3. Le rotor 1 tourne à l'intérieur d'un stator 6 ayant soixante-douze encoches 7.

Le stator 6 et le rotor 1 sont réalisés de manière classique avec des paquets de tôles métalliques formant des masses magnétiques 2, 8.

Les encoches 7 du stator 6 sont prévues pour recevoir des bobinages statoriques et forment entre elles une pluralité de dents statoriques. Selon les formes de réalisation, les encoches 7 seront prévues pour loger des bobinages concentrés, bobinés sur des grosses dents, ou bien des bobinages distribués.

Les bobinages statoriques sont parcourus par un courant statorique et créent un champ magnétique tournant entraînant le rotor 1. Le couple moteur fourni dépend notamment de l'intensité du courant statorique et du flux magnétique dans le rotor 1.

Le rotor 1 est ici du type à concentration de flux. Les aimants permanents 3 sont de section rectangulaire et s'étendent symétriquement au voisinage de plan axiaux équi-angulaires.

Les premiers évidements 4 dans lesquels sont agencés les aimants permanents 3 délimitent douze sections polaires 9 circonférentielles.

L'ensemble de ces sections polaires 9 forme en coupe radiale une figure sensiblement circulaire à plusieurs lobes, correspondant à la saillance des pôles N, S.

Les sections polaires 9 sont ici séparées par encoches 10 radiales dans une partie circonférentielle 11 du rotor 1 au niveau des premiers évidements 4. On notera que ces encoches 10 pourront être fermées dans certaines formes de réalisation.

Ces encoches 10 ont pour effet d'augmenter la réluctance de ces parties du circuit magnétique, et donc de limiter le flux de fuite des aimants 3.

Les sections polaires 9 comportent des deuxièmes évidements 12 agencés entre les aimants permanents 3 dans la partie circonférentielle 11 du rotor 1 et jusqu'à une partie centrale 13 de ce rotor 1.

Chacun de ces deuxièmes évidements 12 présente ici en coupe radiale une forme polygonale, symétrique par rapport à l'axe de symétrie de la section polaire correspondante 9, sensiblement similaire à celle de deux trapèzes associés par leurs bases selon une direction circonférentielle.

Ces deuxièmes évidements 12 contribuent au contrôle du champ magnétique dans le rotor 1.

Ils forment une pluralité de ponts magnétiques 14, 15 de section radiale trapézoïdale dans la partie circonférentielle 11 du rotor 1.

Des essais avec des machines électriques comprenant un rotor 1 ayant les caractéristiques ci-dessus et des simulations sur ordinateur, ont conduit l'entité inventive à considérer que des différences entre les hauteurs htri des ponts magnétiques 14, 15 formés dans les sections polaires 9 par les deuxièmes évidements 12 tendaient à réduire les oscillations de couple d'une machine.

Dans le rotor 1 à douze pôles N, S, dont la coupe radiale partielle est montrée sur la **Figure 1**, un premier pont magnétique 14 d'un pôle N présente une première hauteur htr1, et un deuxième pont magnétique 15 du pôle suivant S présente une deuxième hauteur htr2 plus petite que la première htr1.

Dans cet exemple de réalisation, la séquence des première et deuxième hauteurs htr1, htr2 se répète tout autour du rotor 1. La succession des hauteurs htri des ponts magnétiques 14, 15 des douze pôles est donc la suivante: (htri; i = 1 à 12) = (htr1, htr2; htr1, htr2; htr1, htr2; htr1, htr2; htr1, htr2; htr1, htr2)

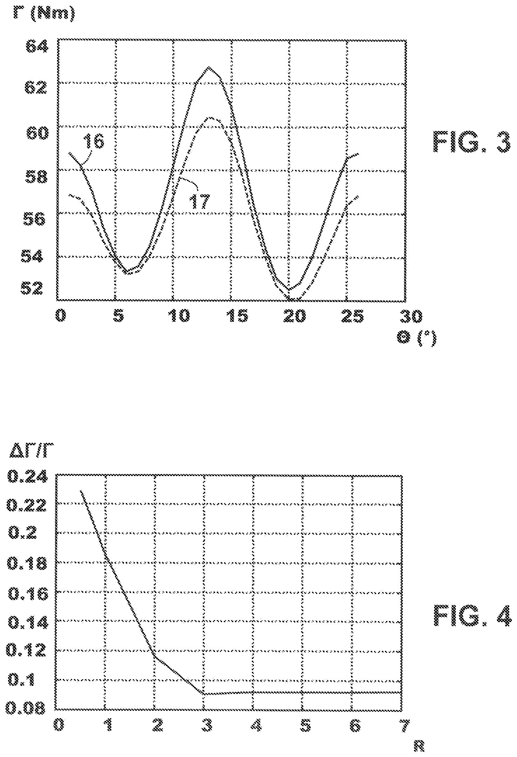

La réduction des oscillations de couple obtenue par cette séquence par comparaison à une machine avec tous les pôles N, S identiques est montrée sur la **Figure 3**.

La courbe en trait continu 16 représente l'ondulation initiale (pôles N, S identiques) en un point de fonctionnement en mode démarreur où l'intensité statorique Aeff est de 300 Aeff à 90° d'angle de couple. On constate que l'amplitude relative $\Delta\Gamma/\Gamma$ des oscillations de couple en fonction de l'angle électrique $\Theta$ est de 18% pour un couple moyen de 57 N.m.

La courbe en pointillé 17 représente l'ondulation résultant de l'asymétrie de deux pôles N, S consécutifs quand un rapport R de la première hauteur à la deuxième htr1/ htr2 vaut 2. On constate que l'amplitude relative $\Delta\Gamma/\Gamma$ des oscillations de couple n'est plus que de 15% pour un couple moyen pratiquement inchangé de 55.5 N.m.

Le gain est donc de 3 points d'ondulation, soit 15% d'ondulation en moins pour une diminution du couple de 1.5 N.m, soit 2.6%.

Les effets de l'asymétrie de deux pôles consécutifs N, S sur les ondulations de couple dépendent du point de fonctionnement.

La **Figure 4** montre la variation de l'amplitude relative $\Delta\Gamma/\Gamma$ des oscillations de couple en fonction du rapport R des hauteurs htr1/htr2 pour une intensité statorique de 300 Aeff à 90° d'angle de couple.

Ces courbes montrent qu'une valeur optimale du rapport R des hauteurs htr1/ htr2 des ponts magnétiques 14, 15 de deux pôles consécutifs N, S est comprise entre 0.5 et 6.

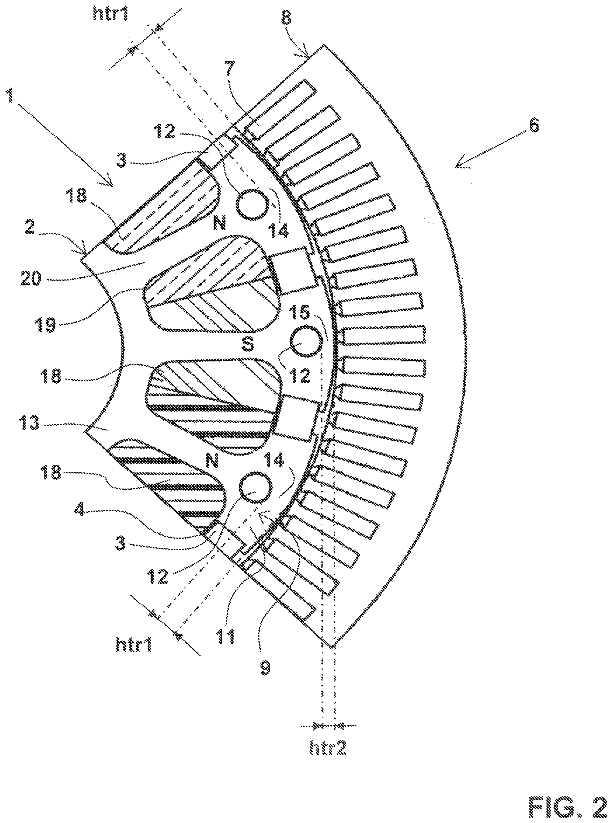

La coupe radiale partielle d'une machine électrique tournante comprenant un rotor 1 à aimants permanents 3 dans une variante de réalisation de l'invention, représentée sur la **Figure 2,** montre bien également des pôles consécutifs N, S présentant une asymétrie de constitution.

Cette variante correspond à une machine hybride à double excitation, c'est-à-dire qui comporte un rotor 1 comprenant à la fois des aimants permanents 3 et des bobines d'excitation 18.

Cette structure présente des avantages en terme de facilité de défluxage par comparaison à un rotor 1 à aimants permanents 3 seuls, ainsi que cela a déjà été mentionné.

Une démarche expérimentale et théorique similaire à celle décrite ci-dessus conduit à une optimisation de la structure ce type de rotor 1 permettant de réduire les oscillations de couple de la machine.

De même que le rotor 1 à aimants permanents seuls montré sur la **Figure 1,** ce type de rotor 1 est un rotor 1 à pôles saillants, c'est-à-dire que sa forme générale est celle d'un cylindre multilobé, chacun des lobes correspondant à un pôle magnétique N, S du rotor 1.

Les aimants 3 sont également disposés de manière enterrée dans la masse magnétique 2 du rotor 1 et se prolongent axialement sur toute la longueur du rotor 1.

Mais dans cette variante, les aimants permanents 3 sont logés dans des premiers évidements 4 répartis seulement dans la partie circonférentielle 11 du rotor 1.

Les sections polaires 9 entre les aimants 3 comportent des évidements 12 de section circulaire dont certains constituent des passages pouvant recevoir des tirants maintenant les paquets de tôles. Ces tirants étant amagnétiques, ces évidements/passages 12 forment des deuxièmes évidements qui permettent de contrôler la distribution du champ magnétique dans le rotor 1.

Outre les premiers évidements 4 contenant les aimants 3 et les deuxièmes évidements 12, le rotor 1 comprend également dans cette variante de l'invention des troisièmes évidements 19 qui se répètent pour chaque pôle N, S et s'étendent axialement sur sensiblement toute la longueur du rotor 1.

Ces troisièmes évidements 19 sont prévus pour loger les bobines d'excitation 18 dans le rotor 2. Ils sont situés sous les aimants 3 (en direction de l'axe 5 du rotor 1) dans une partie intermédiaire du rotor 1 entre la partie circonférentielle 11 et une partie centrale 13 du rotor 1.

Deux troisièmes évidements 19 consécutifs sont séparés par une cloison radiale 20 formant noyau autour duquel est enroulée la bobine d'excitation 18 correspondante.

Les bobines d'excitation 18 peuvent être reliées électriquement selon des montages série, parallèle ou série/parallèle.

La particularité de ce type de machines est que le flux magnétique est quasi nul quand le rotor 1 n'est pas alimenté, parce que le flux magnétique créé par les aimants permanents 3 est pratiquement court-circuité dans le rotor 1.

De plus, le flux magnétique peut être complètement annulé en inversant la direction du courant d'excitation dans les bobines d'excitation 18.

Selon leurs diamètres, et leurs positions dans les sections polaires 9, les évidements 12 définissent des ponts magnétiques 14, 15 de différentes réluctances dans la partie circonférentielle 11 du rotor 1.

L'entité inventive a déterminé que des différences entre les hauteurs htri de ces ponts magnétiques 14, 15, c'est-à-dire des différences de distance entre les évidements 12 et la surface du rotor 1, d'un pôle à l'autre, influaient favorablement sur les oscillations de couple de ce type de machine hybride.

Dans cette variante de réalisation, la séquence des première et deuxième hauteurs htr1, htr2 se répète tout autour du rotor 1. La succession pour les douze pôles des distances htri des évidements 12 au bord du rotor 1 est donc la suivante: (htri; i = 1 à 12) = (htr1, htr2; htr1, htr2; htr1, htr2; htr1, htr2; htr1, htr2; htr1, htr2)

De manière générale, que l'on considère des machines à rotor 1 à aimants permanents 3 seuls, ou des machines à double excitation, l'entité inventive a déterminé qu'il existait une plage de valeurs optimale du rapport des première et deuxième hauteurs htri1/ htr2 des ponts magnétiques 14, 15 de deux pôles N, S consécutifs permettant de minimiser les oscillations de couple sans diminuer les capacités en couple d'une machine.

Dans ces exemples de machines à douze pôles N, S d'autres variantes de réalisation mettent en œuvre des séquences de hauteurs htri de longueur supérieure à deux, telles que celles indiquées de manière non limitatives dans la **Table I** ci-dessous (où Np est le nombre de pôles et Ls est la longueur de la séquence).

**Table I**

| Np | Ls | htri |
|---|---|---|
| 6 | 2 | htr1, htr2; htr1, htr2; htr1, htr2; |
| | 3 | htr1, htr2, htr3; htr1, htr2, htr3; |
| 8 | 2 | htr1, htr2; htr1, htr2; htr1, htr2; htr1, htr2, |
| | 4 | htr1, htr2, htr3, htr4; htr1, htr2, htr3, htr4 ; |
| 10 | 2 | htr1, htr2; htr1, htr2; htr1, htr2; htr1, htr2; htr1, htr2; |
| | 5 | htr1, htr2, htr3, htr4, htr5; htr1, htr2, htr3, htr4, htr5; |
| 12 | 2 | htr1, htr2; htr1, htr2; htr1, htr2; htr1, htr2; htr1, htr2; htr1, htr2 |
| | 3 | htr1, htr2, htr3; htr1, htr2, htr3; htr1, htr2, htr3; htr1, htr2, htr3 |
| | 4 | htr1, htr2, htr3, htr4; htr1, htr2, htr3, htr4; htr1, htr2, htr3, htr4; |
| | 6 | htr1, htr2, htr3, htr4, htr5, htr6; htr1, htr2, htr3, htr4, htr5, htr6; |
| 14 | 2 | htr1, htr2; htr1, htr2; htr1, htr2; htr1, htr2; htr1, htr2; htr1, htr2; htr1, htr2; |
| | 7 | htr1, htr2, htr3, htr4, htr5, htr6, htr7; htr1, htr2, htr3, htr4, htr5, htr6, htr7; |

Selon le nombre Np de pôles N, S, l'asymétrie entre pôles du rotor 1 selon l'invention sera répartie sur trois pôles N, S ou plus, en prenant garde toutefois au balourd et à garder une périodicité nécessaire au tiercé de tôles afin de répartir leurs défauts magnétiques éventuels.

Bien évidemment pour les nombres de paires de pôles premiers (3, 5, 7 ...), le choix des séquences est plus réduit, comme on peut le constater dans la **Table I.**

Pour des séquences de longueur Ls supérieure à deux, notamment de longueur égale à trois, des rapports de hauteurs htr(i-1)/ htri minimisant les oscillations de couple, pour deux pôles N, S consécutifs intermédiaires dans une séquence, sont obtenus par une stratégie progressive.

C'est-à-dire que, si R est le rapport de hauteurs entre la première hauteur htr1 de la séquence et la dernière hauteur htrn de la séquence, choisi dans la plage entre 0.5 et 6 considérée comme optimale, une séquence possible des rapports de hauteurs htr(i-1)/ htri successifs vérifie:

$$R = \frac{htr1}{htrn} = \frac{htr1}{htr2} \bullet \frac{htr2}{htr3} \bullet\bullet\bullet \frac{htr(i-1)}{htri} \bullet\bullet\bullet\bullet \frac{htr(n-1)}{htrn}$$

avec:

$$\frac{htr(i-1)}{htri} = R^{1/(Ls-1)}$$

Par exemple, pour une séquence de longueur trois de type (htr1, htr2, htr3), en choisissant un rapport R optimum égal à 4, cette stratégie progressive donne la séquence: (4htr3, 2htr3, htr3) en fonction de la plus petite des hauteurs htri.

Comme il va de soi, l'invention ne se limite pas aux seuls modes de réalisation préférentiels exposés ci-dessus.

Notamment, les points de fonctionnement spécifiés conduisant à des optima particuliers des rapports de hauteurs R des ponts magnétiques 14, 15, ne sont que des exemples.

D'autres modes de réalisation correspondant à d'autres essais ou simulations de machines électriques tournantes comportant un rotor de structure similaire à celles décrites, ne sortiraient pas du cadre de la présente invention dans la mesure où ils résultent des revendications ci-après.

**Revendications**

**1.** Rotor (1) de machine électrique tournante comprenant une pluralité de pôles Nord (N) et pôles Sud (S) alternés et formés à partir d'une pluralité d'aimants permanents (3) agencés dans des premiers évidements (4) répartis régulièrement autour d'un axe (5) dudit rotor (1) et se prolongeant axialement dans une masse magnétique (2) dudit rotor (1) de manière à définir un nombre prédéterminé Np de sections polaires (9) circonférentielles, lesdites sections polaires (9) comportant des deuxièmes évidements (12) agencés entre lesdits aimants permanents (3) et se prolongeant axialement dans ladite masse magnétique (2) de manière à définir une pluralité de ponts magnétiques (14, 15) présentant une pluralité (i) de hauteurs (htri) dans une partie circonférentielle (11) dudit rotor (1), **caractérisé en ce qu'**une première hauteur (htr1) et une deuxième hauteur (htr2) de deux dits ponts magnétiques (14, 15) consécutifs sont différentes, lesdites première et deuxième hauteurs étant déterminées suivant une direction radiale dudit rotor.

**2.** Rotor (1) de machine électrique tournante selon la revendication 1, **caractérisé en ce qu'**il comprend en outre une pluralité de bobines d'excitation (18) logées dans une pluralité de troisièmes évidements (19) se prolongeant axialement entre lesdites sections polaires (9) et agencés radialement dans une partie intermédiaire dudit rotor entre une partie centrale (13) dudit rotor (1) et ladite partie circonférentielle (11), chacune desdites bobines d'excitation (18) étant insérée autour d'un noyau (20) formant cloison entre deux desdits troisièmes évidements (19) consécutifs, ledit noyau (20) étant sensiblement aligné sur un axe radial central de ladite section polaire (9) correspondante.

**3.** Rotor (1) de machine électrique tournante selon la revendication 2, **caractérisé en ce que** certains desdits deuxièmes évidements (12) constituent des passages de tirants.

**4.** Rotor (1) de machine électrique tournante selon l'une quelconque des revendications 1 à 3 précédentes, **caractérisé en ce que** trois au moins desdites hauteurs (htri) sont différentes.

**5.** Rotor (1) de machine électrique tournante selon l'une quelconque des revendications 1 à 4 précédentes, **caractérisées en ce qu'**une succession desdites hauteurs (htri) dans une direction circonférentielle est la répétition d'une même séquence prédéterminée desdites hauteurs (htri).

**6.** Rotor (1) de machine électrique tournante selon la revendications 5 précédente, **caractérisé en ce qu'**une longueur Ls de ladite séquence est un diviseur dudit nombre prédéterminé Np, différent de 1 et de Np.

**7.** Rotor (1) de machine électrique tournante selon l'une quelconque des revendications 1 à 6 précédentes, **caractérisé en ce qu'**un rapport R entre ladite première hauteur (htr1) et ladite deuxième hauteur (htr2) est prédéterminé de manière à minimiser des oscillations de couple de ladite machine.

**8.** Rotor (1) de machine électrique tournante selon l'une quelconque des revendications 1 à 6 précédentes, **caractérisé en ce qu'**un rapport R entre ladite première hauteur (htr1) et ladite deuxième hauteur (htr2) est prédéterminé de manière à minimiser des oscillations de couple de ladite machine à couple sensiblement constant.

**9.** Rotor (1) de machine électrique tournante selon la revendication 8 précédente, **caractérisé en ce que** ledit rapport R est compris entre 0.5 et 6.

**10.** Machine électrique tournante, **caractérisée en ce qu'**elle comprend un rotor (1) selon l'une quelconque des revendications 1 à 9 précédentes.

**Patentansprüche**

**1.** Rotor (1) einer elektrischen Drehmaschine, der eine Vielzahl von Nordpolen (N) und Südpolen (S) beinhaltet, die sich abwechseln und aus einer Vielzahl von Dauermagneten (3) gebildet sind, die in gleichmäßig um eine Achse (5) des Rotors (1) verteilten ersten Aussparungen (4) eingerichtet sind und sich in einer magnetischen Masse (2) des Rotors (1) axial erstrecken, sodass sie eine vorgegebene Anzahl Np von Polabschnitten (9) am Umfang definieren, wobei die Polabschnitte (9) zweite Aussparungen (12) umfassen, die zwischen den Dauermagneten (3) eingerichtet sind und sich in der magnetischen Masse (2) axial erstrecken, sodass sie eine Vielzahl von magnetischen Brücken (14, 15) definieren, die eine Vielzahl von Höhen (htri) in einem Umfangsteil (11) des Rotors (1) aufweisen, **dadurch gekennzeichnet, dass** sich eine erste Höhe (htr1) und eine zweite Höhe (htr2) von zwei der aufeinanderfolgenden magnetischen Brücken (14, 15) unterscheiden, wobei die erste und die zweite Höhe gemäß einer radialen Richtung des Rotors bestimmt werden.

2. Rotor (1) einer elektrischen Drehmaschine nach Anspruch 1, **dadurch gekennzeichnet, dass** er ferner eine Vielzahl von Erregerspulen (18) beinhaltet, die in einer Vielzahl von dritten Aussparungen (19) aufgenommen sind, die sich zwischen den Polabschnitten (9) axial erstrecken und in einem Zwischenteil des Rotors zwischen einem zentralen Teil (13) des Rotors (1) und dem Umfangsteil (11) radial eingerichtet sind, wobei jede der Erregerspulen (18) um einen Kern (20), der eine Trennung zwischen zwei der aufeinanderfolgenden dritten Aussparungen (19) bildet, angeordnet ist, wobei der Kern (20) im Wesentlichen an einer zentralen radialen Achse des entsprechenden Polabschnitts (9) ausgerichtet ist.

3. Rotor (1) einer elektrischen Drehmaschine nach Anspruch 2, **dadurch gekennzeichnet, dass** bestimmte der zweiten Aussparungen (12) Durchgänge für Zuganker darstellen.

4. Rotor (1) einer elektrischen Drehmaschine nach einem der vorhergehenden Ansprüche 1 bis 3, **dadurch gekennzeichnet, dass** mindestens drei der Höhen (htri) unterschiedlich sind.

5. Rotor (1) einer elektrischen Drehmaschine nach einem der vorhergehenden Ansprüche 1 bis 4, **dadurch gekennzeichnet, dass** eine Folge der Höhen (htri) in einer Umfangsrichtung die Wiederholung einer gleichen vorgegebenen Sequenz der Höhen (htri) ist.

6. Rotor (1) einer elektrischen Drehmaschine nach dem vorhergehenden Anspruch 5, **dadurch gekennzeichnet, dass** eine Länge Ls der Sequenz ein Teiler der vorgegebenen Anzahl Np ist, der ungleich 1 und Np ist.

7. Rotor (1) einer elektrischen Drehmaschine nach einem der vorhergehenden Ansprüche 1 bis 6, **dadurch gekennzeichnet, dass** ein Verhältnis R zwischen der ersten Höhe (htr1) und der zweiten Höhe (htr2) so vorgegeben ist, dass Drehmomentschwankungen der Maschine minimiert werden.

8. Rotor (1) einer elektrischen Drehmaschine nach einem der vorhergehenden Ansprüche 1 bis 6, **dadurch gekennzeichnet, dass** ein Verhältnis R zwischen der ersten Höhe (htr1) und der zweiten Höhe (htr2) so vorgegeben ist, dass Drehmomentschwankungen der Maschine mit im Wesentlichen konstantem Drehmoment minimiert werden.

9. Rotor (1) einer elektrischen Drehmaschine nach dem vorhergehenden Anspruch 8, **dadurch gekennzeichnet, dass** das Verhältnis R zwischen 0,5 und 6 liegt.

10. Elektrische Drehmaschine, **dadurch gekennzeichnet, dass** sie einen Rotor (1) nach einem der vorhergehenden Ansprüche 1 bis 9 beinhaltet.

**Claims**

1. Rotor (1) of a rotating electric machine comprising a plurality of alternating North poles (N) and South poles (S) formed from a plurality of permanent magnets (3) arranged in first recesses (4) regularly distributed about an axis (5) of said rotor (1) and that are prolonged axially in a magnetic mass (2) of said rotor (1) so as to define a predefined number Np of circumferential polar sections (9), said polar sections (9) comprising second recesses (12) arranged between said permanent magnets (3) and that are prolonged axially in said magnetic mass (2) so as to define a plurality of magnetic bridges (14, 15) having a plurality of heights (htri) in a circumferential part (11) of said rotor (1), **characterized in that** a first height (htr1) and a second height (htr2) of the said consecutive magnetic bridges (14, 15) are different, said first and second heights being determined in a radial direction of said rotor.

2. Rotor (1) of a rotating electric machine according to Claim 1, **characterized in that** it further comprises a plurality of excitation coils (18) housed in a plurality of third recesses (19) that are prolonged axially between said polar sections (9) and arranged radially in an intermediate part of said rotor between a central part (13) of said rotor (1) and said circumferential part (11), each of said excitation coils (18) being inserted around a core (20) forming a partition between two of said third consecutive recesses (19), said core (20) being substantially aligned on a central radial axis of said corresponding polar section (9).

3. Rotor (1) of a rotating electric machine according to Claim 2, **characterized in that** some of said second recesses (12) constitute tie-rod passages.

4. Rotor (1) of a rotating electric machine according to any one of the preceding Claims 1 to 3, **characterized in that** at least three of said heights (htri) are different.

5. Rotor (1) of a rotating electric machine according to any one of the preceding Claims 1 to 4, **characterized in that** a succession of said heights (htri) in a circumferential direction is the repetition of a same predetermined sequence of said heights (htri).

6. Rotor (1) of a rotating electric machine according to the preceding Claim 5, **characterized in that** a length Ls of said sequence is a divisor of said predetermined number Np, different from 1 and from Np.

7. Rotor (1) of a rotating electric machine according to any one of the preceding Claims 1 to 6, **characterized in that** a ratio R between said first height (htr1) and said second height (htr2) is predetermined so as to minimize torque oscillations of said machine.

8. Rotor (1) of a rotating electric machine according to any one of the preceding Claims 1 to 6, **characterized in that** a ratio R between said first height (htr1) and said second height (htr2) is predetermined so as to minimize torque oscillations of said machine with substantially constant torque.

9. Rotor (1) of a rotating electric machine according to the preceding Claim 8, **characterized in that** said ratio R is between 0.5 and 6.

10. Rotating electric machine, **characterized in that** it comprises a rotor (1) according to any one of the preceding Claims 1 to 9.

**FIG. 1**

FIG. 2

FIG. 3

FIG. 4

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 2372872 A2
- DE 102008043739 A1
- EP 1450462 A1

**Littérature non-brevet citée dans la description**

- **BIANCHI NICOLA.** Salient Rotor PM Synchronous Motors for an Extended Flux-weakening Operation Range. *IEEE Trans. on Industry Applications,* Juillet 2000, vol. 36 (4
- **LI LI et al.** Some Armature Reaction Compensation Methods, Numerical Design of Experiments and Optimization for a Hybrid Excitation Machine. *IEMDC,* 2009